# EUROPÄISCHE PATENTSCHRIFT

(11) **EP 3 516 184 B1**
(45) Veröffentlichungstag und Bekanntmachung des Hinweises auf die Patenterteilung: **14.10.2020**
(21) Anmeldenummer: 17748757.6
(22) Anmeldetag: 03.08.2017
(51) Int. Cl.: F01N 11/00, F01N 9/00, F01N 3/08, F01N 3/20, F01N 3/10, F01N 3/021

(54) **VERFAHREN ZUM BETRIEB EINER KATALYSATOREINRICHTUNG IM KRAFTFAHRZEUG**
METHOD FOR OPERATING A CATALYST DEVICE IN A MOTOR VEHICLE
PROCÉDÉ POUR FAIRE FONCTIONNER UN DISPOSITIF CATALYSEUR DANS UN VÉHICULE AUTOMOBILE

(30) Priorität: 19.09.2016 DE 102016217899
(43) Veröffentlichungstag der Anmeldung: 31.07.2019
(73) Patentinhaber: Vitesco Technologies GmbH, 30165 Hannover (DE)
(72) Erfinder: REITMEIER, Willibald, 93155 Hemau (DE); HIEN, Markus, 92436 Bruck i. d. OPf. (DE); BURGER, Katharina, 93055 Regensburg (DE)
(74) Vertreter: Waldmann, Georg Alexander
(86) Internationale Anmeldenummer: PCT/EP2017/069741
(87) Internationale Veröffentlichungsnummer: WO 2018/050354

(56) Entgegenhaltungen:
- CA-A1- 2 923 265
- DE-A1- 10 358 495
- DE-A1-102008 012 050
- DE-A1-102010 034 983
- US-A- 4 477 771

## Beschreibung

Die vorliegende Erfindung betrifft ein Verfahren zum Betrieb einer Katalysatoreinrichtung in einem Kraftfahrzeug. Bei der Katalysatoreinrichtung kann es sich beispielsweise um einen SCR(selektive katalytische Reduktion)-Katalysator, einen Dreiwegekatalysator, oder einen Dieseloxidationskatalysator handeln. Im weiteren Sinne wird hier und im Folgenden auch ein Partikelfilter als Katalysatoreinrichtung bezeichnet.

Derartige Katalysatoreinrichtungen werden eingesetzt, um Schadstoffe aus dem Abgas von Kraftfahrzeugen zu entfernen. Sie zeichnen sich dadurch aus, dass sie die Schadstoffe mithilfe eines Katalysatormaterials umsetzen, wobei das Katalysatormaterial in den meisten Fällen nicht verbraucht wird.

SCR-Katalysatoren sind beispielsweise aus dem Dokument Guan et al.: "Review of state of the art technologies of selective catalytic reduction of NOx from diesel engine exhaust", Applied Thermal Engineering 66 (2014) 395-414 bekannt.

Für derartige Katalysatoren werden seit einiger Zeit Mikrowellenmesstechniken eingesetzt, um im Betrieb des Kraftfahrzeugs insbesondere den Beladungszustand des Katalysators zu ermitteln. Diese sind beispielsweise in der DE 10 2010 034 983 A1 und der DE 10 2008 012 050A1 beschrieben.

Bei diesem Verfahren wird ausgenutzt, dass das metallische Katalysatorgehäuse einen Hohlraumresonator ausbildet, in dem Mikrowellen Resonanzen ausbilden können. Hierzu werden mit mindestens einer Antenne Mikrowellen in das Katalysatorgehäuse eingekoppelt und es wird die Lage von Resonanzfrequenzen in Transmission und/oder Reflexion ermittelt. Die Verschiebung einer Resonanzfrequenz gegenüber einer kalibrierten Ausgangslage kann als Maß für die Beladung des Katalysators verwendet werden.

Um allerdings eine hohe Präzision für diese Messtechnik zu erreichen, muss die Kalibrierung der Messeinrichtung verlässlich sein. Insbesondere müssen durch eine Alterung des Katalysators und/oder durch Probleme der Messeinrichtung selbst erzeugte Effekte erkannt werden können.

Es ist somit eine Aufgabe der vorliegenden Erfindung, ein Verfahren zum Betrieb einer Katalysatoreinrichtung im Kraftfahrzeug anzugeben, mit dem elektrische Eigenschaften der Katalysatoreinrichtung hochfrequenzgestützt und besonders verlässlich ermittelt werden können.

Diese Aufgabe wird gelöst durch den Gegenstand des unabhängigen Patentanspruchs.

Vorteilhafte Ausgestaltungen und Weiterbildung der Erfindung sind Gegenstand der Unteransprüche.

Gemäß einem Aspekt der Erfindung wird ein Verfahren zum Betrieb einer Katalysatoreinrichtung im Kraftfahrzeug angegeben, wobei die Katalysatoreinrichtung zumindest eine Abgaskomponente insbesondere mithilfe zumindest eines Katalysatormaterials umsetzt, wobei elektrische Eigenschaften der Katalysatoreinrichtung mittels einer Messeinrichtung ermittelt werden, die die Reflexion und/oder Transmission in ein metallisches Gehäuse der Katalysatoreinrichtung eingekoppelter hochfrequenter elektromagnetischer Wellen erfasst. Unter hochfrequenten elektromagnetischen Wellen werden elektromagnetische Wellen im Bereich der Mikrowellen und abhängig von der Katalysatorgröße bis in den Bereich von >100 MHz bis 20 GHz verstanden.

Dabei wird eine Kalibrierung der Messeinrichtung mithilfe von Referenzpunkten überprüft. Die Referenzpunkte werden in Betriebszuständen der Katalysatoreinrichtung gewonnen, die ausgewählt sind aus der Gruppe von Betriebszuständen umfassend:
- ein Speicher der Katalysatoreinrichtung lagert eine zu speichernde Komponente ein;
- ein Speicher der Katalysatoreinrichtung lagert eine zu speichernde Komponente aus.

Dabei werden Änderungen der ermittelten elektrischen Eigenschaften der Katalysatoreinrichtung als Reaktion auf Änderungen des Beladungszustands der Katalysatoreinrichtung beobachtet und zur Diagnose der Katalysatoreinrichtung und/oder zur Diagnose der Messeinrichtung verwendet.

Dabei ist die zu speichernde Komponente ausgewählt aus der Gruppe umfassend ein Katalysatormaterial und zumindest eine Abgaskomponente.

Das Verfahren hat den Vorteil, dass es eine direkte und besonders verlässliche Ermittlung eines Beladungszustands eines Katalysators erlaubt. Ferner erlaubt es eine Diagnose der Katalysatoreinrichtung sowie der Messeinrichtung.

Dies wird dadurch erreicht, dass die Kalibrierung der Messeinrichtung durch Referenzpunkte gestützt und an Referenzpunkten überprüft wird. Dazu sind die Referenzpunkte geeignet ausgewählt:
Am ersten genannten Referenzpunkt lagert ein Speicher der Katalysatoreinrichtung eine zu speichernde Komponente ein. Dieser Referenzpunkt wird in einem Betriebszustand erreicht, von dem bekannt ist, dass bei den vorliegenden Bedingungen die zu speichernde Komponente eingelagert wird.

In diesem Referenzpunkt werden elektrische Eigenschaften der Katalysatoreinrichtung nicht absolut betrachtet, sondern es wird ihre Änderung als Reaktion auf die Änderung des Beladungszustands der Katalysatoreinrichtung beobachtet. Analog wird im zweiten genannten Referenzpunkt vorgegangen, wenn der Speicher der Katalysatoreinrichtung eine zu speichernde Komponente auslagert.

Gemäß einer Ausführungsform ist die Katalysatoreinrichtung als SCR-Katalysator ausgebildet und die Betriebszustände, in denen die Referenzpunkte gewonnen werden, sind ausgewählt aus der Gruppe von Betriebszuständen umfassend:
- Die Temperatur der Katalysatoreinrichtung liegt im Bereich für den Normalbetrieb und die Katalysatoreinrichtung wird aufgeheizt. In diesem Betriebszustand wird NH₃ ausgelagert, d.h. der Katalysator wird entladen. Dabei wird das Auslagerungsverhalten von NH₃ beobachtet und mit dem Temperaturgradienten, d.h. der Aufheizrate der Katalysatoreinrichtung, korreliert.
- Die Temperatur der Katalysatoreinrichtung liegt im Bereich für den Normalbetrieb und die Katalysatoreinrichtung wird abgekühlt. Dabei wird der Katalysator mit NH₃ beladen, sofern Harnstoff zudosiert wird. Dabei wird das Einspeicherverhalten von NH₃ beobachtet und mit dem Temperaturgradienten korreliert.

Dabei können folgende Effekte genutzt werden:
Falls Harnstoff zudosiert wird und gleichzeitig der Katalysator von einer Temperatur oberhalb von beispielsweise 450 °C abgekühlt wird, so lässt sich von einer Verschiebung der Resonanzfrequenz über die Zeit bei bekannter Temperatur und Gasfeuchte auf die Alterung des Katalysators schließen. Mögliche Kriterien für die Alterung sind dabei das Einlagerungsverhalten von NH₃ sowie die Oxidationsrate.

Beginnt man bei Erreichen einer Betriebstemperatur des Katalysators eine Dosierung von Harnstoff, so kann man aus dem Einlagerungsverhalten von NH₃ ebenfalls auf die Alterung des Katalysators schließen.

Wird die Brennkraftmaschine abgestellt und kühlt der Katalysator auf eine Temperatur unterhalb der Taupunkttemperatur ab, so wird mittels Hochfrequenztechnik die Zeit ermittelt, die nach dem Starten der Brennkraftmaschine vergeht bis das Wasser ausgetrieben ist. Aus einer Verschiebung der Resonanzfrequenz über die Zeit bei bekannter Temperatur und Gasfeuchte kann man dann auf eine Alterung des Katalysators schließen. Alternativ kann man auch nach begonnener Zudosierung von Harnstoff die Zeit ermitteln, die vergeht, bis das eingelagerte Wasser an den Speicherstellen des Katalysators durch Ammoniak ersetzt wurde, und aus einer Verschiebung der Resonanzfrequenz über die Zeit auf die Alterung des Katalysators schließen.

Dabei ist die Ammoniakkonzentration über den Dosiergrad der Harnstoffzudosierung bekannt oder kann durch entsprechende Sensorik ermittelt werden. Zusätzlich kann die Messung durch die Werte eines Abgassensors, beispielsweise eines NOₓ-Sensors oder NH₃-Sensors, unterstützt werden.

Gemäß einer weiteren Ausführungsform ist die Katalysatoreinrichtung als Dreiwegekatalysator ausgebildet und die Betriebszustände, in denen die Referenzpunkte gewonnen werden, sind ausgewählt aus der Gruppe von Betriebszuständen umfassend:
- Der Sauerstoffspeicher lagert Sauerstoff ein;
- Der Sauerstoffspeicher lagert Sauerstoff aus.

Verändert man nun an den genannten Referenzpunkten gezielt den Beladungszustand des Katalysators durch Be- oder Entladen, kann aus Verschiebungen der Resonanzfrequenz auf Veränderungen der Messeinrichtung geschlossen werden.

Gemäß einer weiteren Ausführungsform ist die Katalysatoreinrichtung als LNT(Lean NO_{X} Trap)-Katalysator ausgebildet und die Betriebszustände, in denen die Referenzpunkte gewonnen werden, sind aus der Gruppe von Betriebszuständen ausgewählt umfassend:
- Der NOx-Speicher lagert NO_{X} ein;
- Der NOx-Speicher lagert NO_{X} aus.

Verändert man nun an den genannten Referenzpunkten gezielt den Beladungszustand des Katalysators durch Be- oder Entladen, kann aus Verschiebungen der Resonanzfrequenz auf Veränderungen der Messeinrichtung geschlossen werden.

Gemäß einer weiteren Ausführungsform ist die Katalysatoreinrichtung als ASC(Ammoniak-Schlupf-Katalysator)-Katalysator ausgebildet und die Betriebszustände, in denen die Referenzpunkte gewonnen werden, sind ausgewählt aus der Gruppe von Betriebszuständen umfassend:
- Die Temperatur der Katalysatoreinrichtung liegt im Bereich für den Normalbetrieb und die Katalysatoreinrichtung wird aufgeheizt. Analog zum Vorgehen wie es für den SCR-Katalysator beschrieben wurde, wird in diesem Betriebszustand das Auslagerungsverhalten von Ammoniak beobachtet.
- Die Temperatur der Katalysatoreinrichtung liegt im Bereich für den Normalbetrieb und die Katalysatoreinrichtung wird abgekühlt. In diesem Betriebszustand wird, wie ebenfalls bereits für den SCR-Katalysator beschrieben, dass Einlagerungsverhalten von Ammoniak beobachtet.

Vorteilhafterweise wird bei der Gewinnung von Referenzpunkten zumindest eine der Messgrößen Temperatur der Katalysatoreinrichtung, Gasfeuchte in der Katalysatoreinrichtung, Luftmassenstrom durch die Katalysatoreinrichtung, Dosiermenge eines zudosierten Katalysatormaterials, Gaszusammensetzung NO/NO₂ im Abgas, Rußemissionen, Differenzdruck an einem Partikelfilter berücksichtigt.

Dazu werden diese Messgrößen mithilfe geeigneter Sensoren überwacht, insbesondere mithilfe eines Temperatursensors im Katalysator, mithilfe der Lambdasonde, mithilfe eines Luftmassenmessers und mithilfe einer Einheit, die die Menge eines zudosierten Katalysatormaterials, insbesondere Harnstoff, überwacht.

Diese Ausführungsform hat den Vorteil, dass Einflüsse der genannten Messgrößen auf die elektrischen Eigenschaften der Katalysatoreinrichtung bei der Überprüfung der Kalibrierung berücksichtigt werden können, so dass diese genauer wird.

Das Verfahren wird zur Diagnose der Katalysatoreinrichtung und/oder zur Diagnose der Messeinrichtung verwendet.

Neben der Lage von Referenzen ist dabei insbesondere auch das Einlagerungs- und Auslagerungsverhalten der Katalysatoreinrichtungen zur Beurteilung beispielsweise der Alterung der Katalysatoreinrichtung relevant: ein gealterter Katalysator zeigt ein verzögertes Einlagerungsverhalten und ein beschleunigtes Auslagerungsverhalten. Auch eine verringerte absolute Speicherfähigkeit des Katalysators deutet auf eine Alterung hin.

In ähnlicher Weise können Veränderungen einer Antenne der Messeinrichtung, beispielsweise Verschmutzungen durch Feuchte oder Rußablagerungen, durch eine Veränderung der Resonanzfrequenz festgestellt werden.

## Patentansprüche

1. Verfahren zum Betrieb einer Katalysatoreinrichtung im Kraftfahrzeug, wobei die Katalysatoreinrichtung zumindest eine Abgaskomponente umsetzt, wobei elektrische Eigenschaften der Katalysatoreinrichtung mittels einer Messeinrichtung ermittelt werden, die die Reflexion und/oder Transmission in ein metallisches Gehäuse der Katalysatoreinrichtung eingekoppelter hochfrequenter elektromagnetischer Wellen erfasst,
wobei eine Kalibrierung der Messeinrichtung mit Hilfe von Referenzpunkten überprüft wird, wobei die Referenzpunkte in Betriebszuständen der Katalysatoreinrichtung gewonnen werden, die ausgewählt sind aus der Gruppe von Betriebszuständen umfassend:
- ein Speicher der Katalysatoreinrichtung lagert eine zu speichernde Komponente ein;
- ein Speicher der Katalysatoreinrichtung lagert eine zu speichernde Komponente aus;
wobei Änderungen der ermittelten elektrischen Eigenschaften der Katalysatoreinrichtung als Reaktion auf Änderungen des Beladungszustands der Katalysatoreinrichtung beobachtet und zur Diagnose der Katalysatoreinrichtung und/oder zur Diagnose der Messeinrichtung verwendet werden.

2. Verfahren nach Anspruch 1,
wobei die Katalysatoreinrichtung als SCR-Katalysator ausgebildet ist und die Betriebszustände, in denen die Referenzpunkte gewonnen werden, ausgewählt sind aus der Gruppe von Betriebszuständen umfassend:
- die Temperatur der Katalysatoreinrichtung liegt im Bereich für den Normalbetrieb und die Katalysatoreinrichtung wird aufgeheizt;
- die Temperatur der Katalysatoreinrichtung liegt im Bereich für den Normalbetrieb und die Katalysatoreinrichtung wird abgekühlt.

3. Verfahren nach Anspruch 1,
wobei die Katalysatoreinrichtung als Dreiwege-Katalysator ausgebildet ist und die Betriebszustände, in denen die Referenzpunkte gewonnen werden, ausgewählt sind aus der Gruppe von Betriebszuständen umfassend:
- der Sauerstoffspeicher lagert Sauerstoff ein;
- der Sauerstoffspeicher lagert Sauerstoff aus.

4. Verfahren nach Anspruch 1,
wobei die Katalysatoreinrichtung als LNT-Katalysator ausgebildet ist und die Betriebszustände, in denen die Referenzpunkte gewonnen werden, ausgewählt sind aus der Gruppe von Betriebszuständen umfassend:
- der NO_{X}-Speicher lagert NO_{X} ein;
- der NO_{X}-Speicher lagert NO_{X} aus.

5. Verfahren nach Anspruch 1,
wobei die Katalysatoreinrichtung als ASC-Katalysator ausgebildet ist und die Betriebszustände, in denen die Referenzpunkte gewonnen werden, ausgewählt sind aus der Gruppe von Betriebszuständen umfassend:
- die Temperatur der Katalysatoreinrichtung liegt im Bereich für den Normalbetrieb und die Katalysatoreinrichtung wird aufgeheizt;
- die Temperatur der Katalysatoreinrichtung liegt im Bereich für den Normalbetrieb und die Katalysatoreinrichtung wird abgekühlt.

6. Verfahren nach einem der Ansprüche 1 bis 5,
wobei bei der Gewinnung von Referenzpunkten zumindest eine der folgenden Messgrößen berücksichtigt wird:
Temperatur der Katalysatoreinrichtung, Gasfeuchte in der Katalysatoreinrichtung, Luftmassenstrom durch die Katalysatoreinrichtung, Dosiermenge eines zudosierten Katalysatormaterials, Gaszusammensetzung NO/NO₂ im Abgas, Rußemissionen, Differenzdruck an einem Partikelfilter.

## Claims

1. Method for operating a catalytic converter device in a motor vehicle which converts at least one exhaust gas component, wherein electrical properties of the catalytic converter device are determined by means of a measuring device which detects the reflection and/or transmission of high-frequency electromagnetic waves which are input into a metallic housing of the catalytic converter device, wherein calibration of the measuring device is checked using reference points, wherein the reference points are acquired in operating states of the catalytic converter device which is selected from the group of operating states comprising:
- an accumulator of the catalytic converter device stores a component which is to be stored;
- an accumulator of the catalytic converter device removes from storage a component which is to be stored; wherein changes in the determined electrical properties of the catalytic converter device in reaction to changes in the loading state of the catalytic converter device are observed and used to diagnose the catalytic converter device and/or to diagnose the measuring device.

2. Method according to Claim 1,
wherein the catalytic converter device is embodied as an SCR catalytic converter, and the operating states in which the reference points are acquired are selected from the group of operating states comprising:
- the temperature of the catalytic converter device is in the range for normal operation, and the catalytic converter device is heated;
- the temperature of the catalytic converter device is in the range for normal operation and the catalytic converter device is cooled.

3. Method according to Claim 1,
wherein the catalytic converter device is embodied as a three-way catalytic converter, and in that the operating states in which the reference points are acquired are selected from the group of operating states comprising:
- the oxygen accumulator puts oxygen into storage;
- the oxygen accumulator removes oxygen from storage.

4. Method according to Claim 1,
wherein the catalytic converter device is embodied as an LNT catalytic converter, and the operating states in which the reference points are acquired are selected from the group of operating states comprising:
- the NOₓ accumulator puts NOₓ into storage;
- the NOₓ storage accumulator removes NOₓ from storage.

5. Method according to Claim 1,
wherein the catalytic converter device is embodied as an ASC catalytic converter, and the operating states in which the reference points are acquired are selected from the group of operating states comprising:
- the temperature of the catalytic converter device is in the range for normal operation, and the catalytic converter device is heated;
- the temperature of the catalytic converter device is in the range for normal operation and the catalytic converter device is cooled.

6. Method according to one of Claims 1 to 5,
Wherein, during the acquisition of reference points, at least one of the following measurement variables is taken into account:
the temperature of the catalytic converter device, the gas humidity in the catalytic converter device, the air mass flow through the catalytic converter device, the metering quantity of a catalyst material to be metered in, the gas composition of NO/NO₂ in the exhaust gas, the soot emissions and the differential pressure at a particle filter.

## Revendications

1. Procédé de fonctionnement d'un convertisseur catalytique dans un véhicule automobile, le convertisseur catalytique convertissant au moins un composant de gaz d'échappement, des propriétés électriques du convertisseur catalytique étant déterminées au moyen d'un dispositif de mesure qui détecte la réflexion et/ou la transmission d'ondes électromagnétiques à haute fréquence injectées par couplage dans un boîtier métallique du convertisseur catalytique,
un étalonnage du dispositif de mesure étant vérifié à l'aide de points de référence, les points de référence étant obtenus dans des états de fonctionnement du convertisseur catalytique qui sont sélectionnés dans le groupe d'états de fonctionnement comprenant :
- un accumulateur du convertisseur catalytique emmagasine un composant à stocker ;
- un accumulateur du convertisseur catalytique délivre un composant à stocker ;
des changements de propriétés électriques déterminées du convertisseur catalytique étant observés en réaction à des changements d'état de charge du convertisseur catalytique et utilisés pour diagnostiquer le convertisseur catalytique et/ou pour diagnostiquer le dispositif de mesure.

2. Procédé selon la revendication 1,
le convertisseur catalytique étant conçu comme un convertisseur catalytique SCR et les états de fonctionnement dans lesquels les points de référence sont obtenus étant sélectionnés dans le groupe d'états de fonctionnement comprenant :
- la température du convertisseur catalytique est dans la plage de fonctionnement normal et le convertisseur catalytique est chauffé ;
- la température du convertisseur catalytique est dans la plage de fonctionnement normal et le convertisseur catalytique est refroidi.

3. Procédé selon la revendication 1,
le convertisseur catalytique étant conçu comme un convertisseur catalytique à trois voies et les états de fonctionnement dans lesquels les points de référence sont obtenus étant sélectionnés dans le groupe d'états de fonctionnement comprenant :
- l'accumulateur d'oxygène emmagasine de l'oxygène ;
- l'accumulateur d'oxygène délivre de l'oxygène.

4. Procédé selon la revendication 1,
le convertisseur catalytique étant conçu comme un convertisseur catalytique LNT et les états de fonctionnement dans lesquels les points de référence sont obtenus étant choisis dans le groupe d'états de fonctionnement comprenant :
- l'accumulateur de NOₓ emmagasine des NOₓ ;
- l'accumulateur de NOₓ délivre des NOₓ.

5. Procédé selon la revendication 1,
le convertisseur catalytique étant conçu comme un convertisseur catalytique ASC et les états de fonctionnement dans lesquels les points de référence sont obtenus étant sélectionnés dans le groupe d'états de fonctionnement comprenant :
- la température du convertisseur catalytique est dans la plage de fonctionnement normal et le convertisseur catalytique est chauffé ;
- la température du convertisseur catalytique est dans la plage de fonctionnement normal et le convertisseur catalytique est refroidi.

6. Procédé selon l'une des revendications 1 à 5,
l'une au moins des grandeurs de mesure suivantes étant prise en compte lors de l'obtention des points de référence :
la température du convertisseur catalytique, l'humidité des gaz dans le convertisseur catalytique, le débit massique d'air à travers le convertisseur catalytique, la quantité de dosage d'un matériau de convertisseur catalytique dosé, la composition des gaz NO/NO₂ dans les gaz d'échappement, les émissions de suie, la pression différentielle au niveau d'un filtre à particules.
